# EUROPEAN PATENT APPLICATION

(11) **EP 1 912 177 A1**
(43) Date of publication of application: **16.04.2008**
(21) Application number: 07020043.1
(22) Date of filing: 12.10.2007
(51) Int. Cl.: G07B 17/00

(54) **Physical delivery location validation for enhancing mailstream composition**

(30) Priority: 13.10.2006 US 851311 P
(71) Applicant: Bowe Bell + Howell Company, Durham NC 27713-1803 (US)
(72) Inventor: Paul, Mark G., Raleigh NC 27606 (US)
(74) Representative: Zimmermann, Tankred Klaus

(57) **Abstract**

Hard copy mail pieces are processed to generate a mailstream containing only mail pieces with address information corresponding to valid physical delivery locations. An inserter device compiles the mail pieces. A validation system determines whether address information on mail pieces corresponds to valid physical delivery locations. A post inserter processing device processes the mail pieces based on whether their address information corresponds to valid physical delivery locations. For example, a postage meter may be disabled with respect to a mail piece found to have invalid address information.

## Description

### RELATED APPLICATION

This application claims the benefit of U.S. Provisional Application No. 60/851,311, filed October 13, 2007, entitled "Address quality validation for enhancing mailstream composition," the disclosure of which also is entirely incorporated herein by reference.

### TECHNICAL FIELD

Methods and systems are provided for the processing of hard copy mail pieces to generate a mailstream of hard copy mail pieces for mailing, with at least some post production processing controlled responsive to a determination of whether address information appearing on each hard copy mail piece corresponds to a valid physical delivery location.

### BACKGROUND

For any organization that distributes millions of mail pieces via a postal authority or other mail delivery channel (e.g., the United States Postal Service-USPS), physical delivery location, quality and integrity is critical. Automated equipment such as sorters or inserters may be used by the mailer (i.e., an enterprise, organization or group dedicated to mail processing) or postal authority to segregate mail further into trays destined for advancement to a specific address. The processing in this case is performed either before or after the mail is directed to the postal authority, and is intended to prepare the mail for delivery to a recipient corresponding to the address. Many processing steps occur in order to achieve this result. These steps may include printing a delivery point barcode that represents the delivery address, sorting the mail into trays that are destined for the next postal authority mail processing center, and eventually arranging the mail pieces into a carrier walk sequence to make it easy for the mail delivery carrier to find the mail needed at each delivery stop.

Also, various equipment may be employed in performing the mail processing steps, including the usage of multi-line optical character reader (MLOCR) to read the printed address, printers to print delivery point barcodes, sorters to sort the mail pieces by destination group, and inserters to process the printed material in order to generate mail pieces that are manufactured in the correct pre-sort groupings. Usage of such equipment enables mail to be processed and interpreted more efficiently. Furthermore the postal authority charges lower postage rates to mailers for mail pieces that are automation friendly. When mail pieces are addressed to be automation friendly, less manual labor is required by the postal authority to distribute and deliver the mail, enabling the mailer to benefit from "work-sharing" discounts.

Address quality is therefore a critical aspect to consider when preparing a mailing. The address data that appears on a mail piece must of sufficient quality to allow for machine automation by the mailer, hence entitling the mailer to work-sharing discounts from the postal authority. The quality of an address is only sufficient if the address data appearing on a mail piece is recognized by the postal authority as a valid mailing address. Another aspect of address quality requires that address data be standardized or formatted correctly. Standard abbreviations and correct spelling should be used to allow each element of the address to be matched against postal authority approved databases (e.g., CASS data), which is a prerequisite for proper barcode application onto the mail piece. However, even if the address data applied meets address quality standards, this does not guarantee that the applied address corresponds to an actual physical delivery location.

Consider for example a bank that wishes to send a mass credit card solicitation mailing to millions of prospective card holders. Preferably, the mailer (e.g., the issuing bank or its agent) should ensure that the address data for the prospective cardholders meet postal authority approved address quality standards, and also that these addresses correspond to valid physical locations. While ensuring that address data meets approved standards is helpful, if the physical site or suite in an address does not exist, the address data is of little value. Use of addresses which do not correspond to valid physical delivery locations reduces cost efficiency and the bank's overall return-on-investment in its mail processing infrastructure. Various physical delivery location validation considerations may include:
• Ensuring that the primary address number appearing on a mail piece corresponds to a real or confirmed physical delivery location;
• Ensuring that the proper suite number, room number, or apartment number is specified on a mail piece addresses to a multi-unit building;
• Ensuring that rural delivery addresses include a street name and street number.

These and many other physical delivery location validation considerations are detailed in the USPS Domestic Mail Manual and other supporting postal authority documentation. Other postal authorities may have their own standards that define acceptable mail for automated processing.

To provide some level of physical location delivery assurance, many mailers employ physical delivery location quality software, which is intended to update, correct or modify the mailer's address list data prior to the printing of the mail pieces. The software is useful for providing a means of delivery information correction or updating prior to the generation of a mail piece. Mailers can then reduce postage costs by avoiding payment for mail pieces that cannot be physically delivered by the postal authority, and would ultimately be returned to the sender as undeliverable. Although these software utilities are helpful, they only affect the address list data (prior to print), and have no effect on the generated mail pieces once the mail pieces are sent to the mailstream or to other post processing devices (such as a postage application process e.g., a postage meter). Consequently, physical location delivery deficiencies stemming from the actual printed markings on a mail piece cannot be addressed by software.

### SUMMARY

Hence, there is a need in the art for methods and systems that can detect physical location delivery deficiencies in address information upon the processing of such defective mail pieces, and respond appropriately to any detected deficiencies before the defective mail pieces are placed into the mailstream for handling by the postal authority. Furthermore, the methods and systems should, where practical, prevent mail pieces from having postage applied if there are physical delivery location deficiencies.

For example, a system of the present disclosure for processing mail to generate a mailstream of hard copy mail pieces for mailing, includes an inserter device to compile the hard copy mail pieces which form the mailstream. The inserter device is connected to a post inserter processing device, which processes the hard copy mail pieces of the mailstream coming from the inserter device in accordance with device control options. Prior to reaching the post inserter processing device, mail pieces must pass through a validation system, which is coupled to the inserter device. The validation system captures images of the address information from the hard copy mail pieces as they are processed by the inserter device. It then checks whether the address information appearing in the image of a hard copy mail piece corresponds to a valid physical delivery location. A control module, activates the device control options of the post inserter processing device based on whether the address information appearing in the images of the hard copy mail pieces corresponds to a valid physical delivery location.

As another example, the present specification also discloses a method for processing mail to generate a mailstream of hard copy mail pieces for mailing. This method involves compiling hard copy mail pieces in a mail production device, to form the mailstream. Images of address information are captured from a plurality of the hard copy mail pieces as those pieces are being processed by the mail production device. The method also entails checking whether the address information appearing in the images of each of the plurality of the hard copy mail pieces corresponds to a valid physical delivery location. One or more device control options for post production processing of hard copy mail pieces can be activated, based on outcomes of the address information checking. A post production processing device operates on the plurality of the hard copy mail pieces according to the selected device control options.

Another exemplary method disclosed herein is for modifying the processing of hard copy mail pieces to form a mailstream. The method includes obtaining address information appearing on a hard copy mail piece generated in a mail production device, and determining that the address information appearing on the hard copy mail piece does not correspond to a valid physical delivery location. One or more device control options for processing of the hard copy mail piece are activated responsive to determining that the address information appearing on the hard copy mail piece does not correspond to a valid physical delivery location. The method then entails modifying post production processing of the hard copy mail piece to implement the device control options selected in the step of selecting.

Additional features and advantages of the disclosure will be set forth in the description below, and in part will be apparent from the description, or may be learned by practice of the disclosure. The objectives and other advantages of the disclosure will be realized and attained by the structure particularly pointed out in the written description and claims hereof as well as the appended drawings.

It is to be understood that both the foregoing general description and the following detailed description are exemplary and explanatory and are intended to provide further explanation of the disclosure as claimed.

### BRIEF DESCRIPTION OF THE DRAWINGS

The accompanying drawings, which are included to provide further understanding of the disclosure and are incorporated in and constitute a part of this specification, illustrate embodiments of the disclosure and together with the description serve to explain the principles of the disclosure. In the drawings:

Fig. 1 is a high-level functional block diagram depicting a general system for processing mail to generate a mailstream of hard copy mail pieces for mailing.

Fig. 2 is a functional block diagram depicting a validation system integrated into an inserting mailing system for the creation of a mailstream having quality delivery composition.

Fig. 3 is a flowchart diagram depicting a method for addressing physical delivery location quality deficiencies as detected during processing of a mail piece by the system of Fig. 2.

### DETAILED DESCRIPTION

It is contemplated that the subject matter described herein may be embodied in many forms. Accordingly, the embodiments described in detail below are the presently preferred embodiments, and are not to be considered as limitations. In the following detailed description, numerous specific details are set forth by way of example in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

The disclosed embodiments address, among other things, the processing of hard copy mail pieces to generate a mailstream of hard copy mail pieces for mailing, with at least some post production processing controlled responsive to a determination of whether address information appearing on each hard copy mail piece corresponds to a valid physical delivery location.

The examples therefore relate to various means for addressing a physical delivery location deficiency that may be present in physical markings (e.g., address information) on a mail piece. Detecting such deficiencies (generally referred to as physical delivery location quality deficiencies) prior to the entry of mail pieces into an output or sort tray (e.g., the mailstream) allows mailers to more efficiently detect and prevent errors that may lead to reduced work sharing benefits. Furthermore, identifying mail pieces with physical delivery location quality deficiencies prior to their entry into the mailstream provides a convenient means of informing the mailer of deficiencies inherent in their mailing lists.

The examples discussed below also may provide a means for preventing the application of postage (e.g., by way of a postage meter or other postage application means) onto mail pieces having inherent physical delivery location quality deficiencies, thereby preventing unnecessary postage expenditure and waste.

"Physical delivery location quality" pertains to any factors, conditions or deficiencies that impact the ability of a postal authority or other mail distribution channel to accurately and efficiently advance mail to its intended delivery point. Physical delivery location quality also refers to any factors, conditions or deficiencies that prevent the deliverability of mail once advanced. The present disclosure addresses instances where the delivery information recognized by the postal authority (e.g., recognized street name, city and zip) placed on mail is deficient, resulting in the mail being physically undeliverable.

Relevant factors that affect physical delivery location quality may include, but are not limited to:
• whether physical deliverability via a designated carrier route code (e.g., as specified within the keyline of a mail piece) is possible, and whether the code corresponds to the printed address information;
• whether physical deliverability to suite numbers associated with business addresses is possible;
• whether an address can accept or receive deliverables or mail pieces which have been damaged as a result of natural disaster or other extreme circumstances.
• whether rural routes are used, in light of the fact that such routes are invalid, and that street numbers and names are required for all addresses;
• whether primary address number indicated upon a mail piece corresponds to a real or confirmed physical delivery location;
• whether physical deliverability of a mail piece addressed to a room number or apartment number of a multi-unit building is possible.

The present disclosure provides a framework and scheme for detecting and handling physical delivery location quality problems as they occur, particularly during mail processing through an inserter or other mail production device. One aspect of the present disclosure includes enabling the mailer to select various device control options to be executed upon detection of address information corresponding to an invalid physical delivery location. The device control options are machine instructions which affect the operation of one or more post production processing devices intended for operation upon mail pieces processed by the mail processing device. Another aspect of the present disclosure is that various reports may be generated in response to the execution of the device control options and their influence upon the mailstream for the customer, mailer, or postal authority. As explained below, each device control option corresponds to one or more actions or techniques that may be executed for detecting or handling physical delivery location quality problems. Those skilled in the art will value the importance of having the present disclosure detect or handle physical delivery location quality deficiencies prior to the entry of hard copy mail pieces into the mailstream, or before the application of postage onto the hard copy mail pieces.

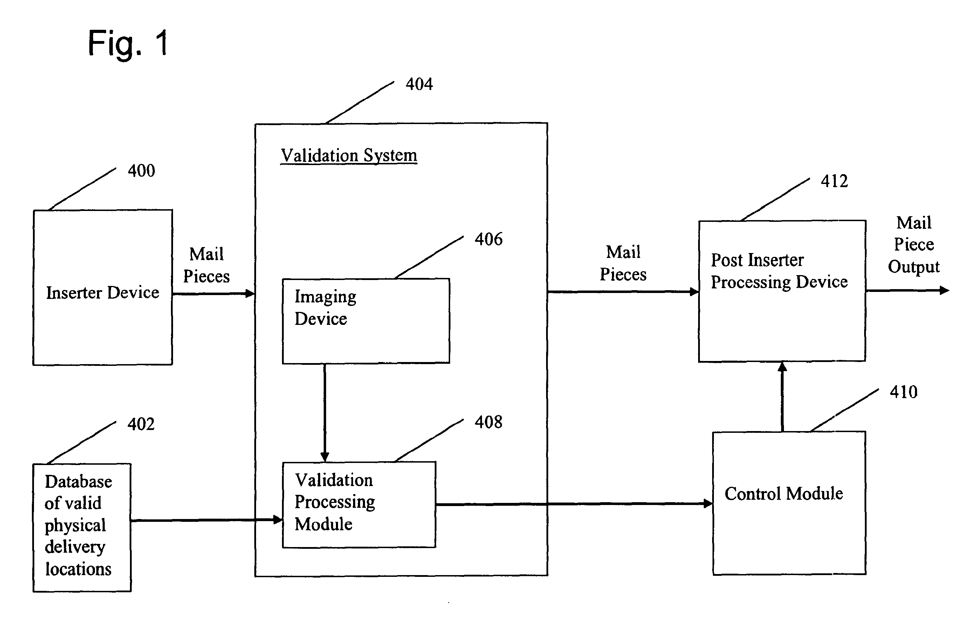

Fig. 1 shows a high-level overview of a system of the present disclosure for processing mail to generate a mailstream of hard copy mail pieces for mailing. The inserter device 400 compiles individual hard copy mail pieces for entry into the mailstream. Inserter devices such as 400 are common in the art, and a person of skill in the art would be familiar with the various devices which may comprise an inserter device. The illustrated system also includes a validation system 404, for validating address information on mail pieces processed by the inserter.

The validation system 404 comprises an imaging device 406 and a validation processing module 408. The imaging device 406 captures images of the address information appearing on mail pieces, as they are being processed by the inserter device 400. The imaging device 406 can be any device capable of capturing the images, such as a scanner or camera. The validation processing module 408 may be a computer or the like configured for processing data from the captured images. The validation processing module 408 examines the address information appearing in the images captured by the imaging device 406, and compares the address information in the images to a database of valid physical delivery locations 402. If the address in an image matches an address in the database of valid physical delivery locations 402, then the address in the image is a valid physical delivery location, otherwise it is invalid. The validation processing module 408 may also validate the address information against a variety of other factors that affect physical delivery location quality.

Various procedures and resources are available for performing physical delivery location quality analysis with respect to the USPS to determine whether there are address deficiencies. These procedures and resources include but not limited to: Delivery Point Validation (DPV), Locatable Address Conversion Link (LACslink), Suitelink, and StopLINK. Those skilled in the art will recognize that other postal authority approved physical delivery location quality procedures and resources may be implemented and utilized as postal authority requirements change over time, and that the present disclosure is not limited to any one procedure or methodology.

Whether using any such resource, the database of valid physical delivery locations 402 can be stored on a hard drive, a disk, a computer, or a network, among other things, separate from or incorporated in the hardware platform that serves as the validation processing module 408. The database of valid physical delivery locations 402 may be located in the same room as the validation system 404, in another room, in a completely different location, or it may distributed among many rooms or many locations, among other places. The validation processing module 408 can be software, firmware, a processor, computer, network or other device.

The validation processing module 408 forwards the results of its checks for validity of address information to the control module 410. The control module 410 can be software, firmware, a processor, computer, network or other device. The control module 410 activates one or more device control options for the post inserter processing device 412. The effect of activating the device control options determines the actions to be taken by the components which make up the post inserter processing device 412.

The post inserter processing device 412 may include components such as a postage meter, labeler, printer, or edge marker, among other things. The control module 410 sets the device control options to the appropriate configuration based on whether the address information appearing on a mail piece corresponds to a valid physical delivery location. For example, if the address information appearing on a mail piece corresponds to an invalid physical delivery location, the control module 410 may set the device control options to disable one or more components of the post inserter processing device 412, such as a postage meter. When a mail piece is advanced from the inserter device 400 to the post inserter processing device 412, the post inserter processing device 412 processes the mail piece according to the device control options set by the control module 410.

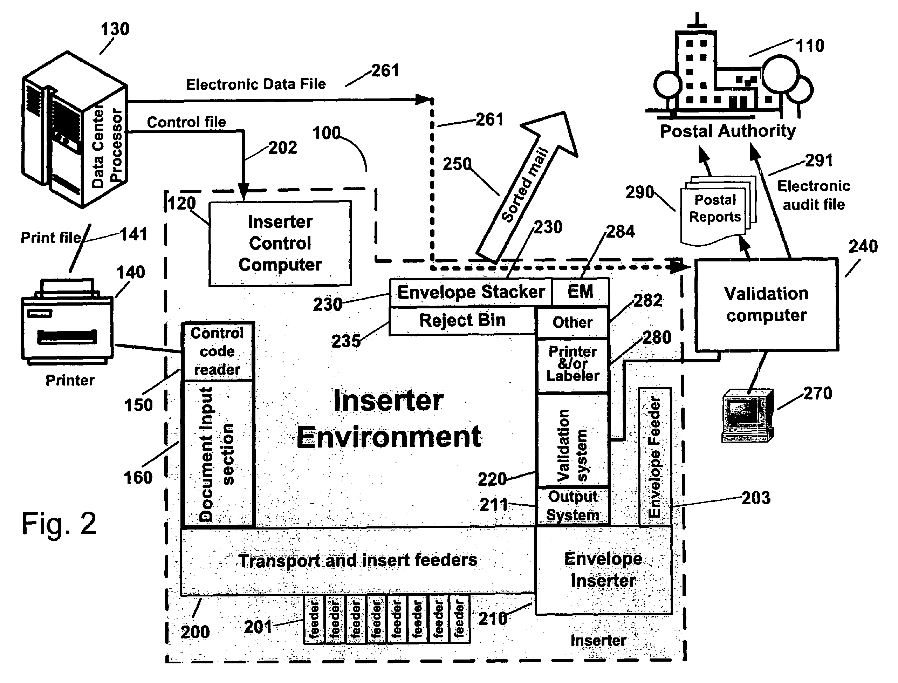

Reference is now made to more detailed examples illustrated in the further drawings, which are discussed below. Fig. 2 shows an inserter environment 100 for detecting and handling physical delivery location quality deficiencies in the context of an Automated Document Factory. Typically, the Automated Document Factory (ADF) contains a variety of equipment and resources used to finalize mail for advancement to a postal authority. The ADF may include document processors, address list processors and data center processors 130, printers 140, multiple document inserters and sorting equipment (not shown). The ADF interfaces with the postal authority 110 for providing sorted mail 250 and the accompanying hardcopy reports 290 or electronic reports 291 necessary to document the "work share" performed to qualify for discounts and documentation to account for the postage due for the mailing. The format for electronic data in the audit report file 291 will be as the postal authority requires. Generally, all data that is reported in hardcopy reports 290 is included as well as details on individual mail pieces for quality, audit and tracking are added. The current standard for USPS is mail.dat. Mail that is to be mailed without the benefit of postage discounts, mailed at full rate, also will be processed by this delivery point quality system.

The exemplary inserter environment 100 responsible for high speed generation of a mailstream may come in numerous configurations to meet specialized document processing requirements, and is shown by way of example in Fig. 2. A typical inserter environment 100, includes one or more components as will be described forming an inserter device operable in connection with a validation system 221 and one or more post inserter processing devices. Examples of post processing devices include an envelope stacker 230 and associated reject bin 235, a printer and/or labeler 280, an edge marking device (EM) 284, a postage meter (not separately shown) and any other device(s) 282, which perform various other processing functions upon documents. Documents to be inserted are created on a printer 140 in roll, fan fold, or sheet format and loaded into the inserter document input section 160 for processing. The document input section 160 may contain various cutters, accumulators and folders as required. A control code reader 150 may be included to read control data from barcodes or other indicia to identify document characteristics such as the page count, insert requirement, ZIP Code and weight, among other parameters for controlling document production by an inserter control computer 120. The inserter control computer includes a control module capable of activating device control options that dictate the behavior and operation of the various devices in the inserter environment 100. This may include instructions for controlling the mail transport mechanism of the inserter, diverters, in-line print modules, in-line imaging devices, and other devices within the inserter environment 100. It will be seen later with respect to the examples herein that the device control options which control the operation of at least one of the post inserter processing devices may be set in response to whether address information on mail pieces corresponds to valid physical address locations.

Finalized mail is generally trayed in groupings of common three or five digits but other groupings are allowed. Mail submitted with full postage requires no pre-processing. Alternately or in addition to the control codes, a control file 202, which contains all necessary control information, is sent to the inserter control computer 120. Each printed document is input to the transport 200 where one or more inserts may be added, as via the insert feeders 201, as specified in the control file,. Finally the entire collated material needed to create the finished mail piece is inserted into an envelope in the envelope inserter 210. The finished mail piece is then sent to the output system 211 where it is re-oriented as required for any subsequent processing.

Generally, the final processing step is to stack the mail for sweeping into one or more output trays of the envelope stacker 230 located in an output position (e.g., the inserter backend). The accumulation of a plurality of mail pieces into the output trays (e.g., in the envelope stacker 230) represents the final mailstream, where the number of deliverable mail pieces of the collective mailstream influences the composition quality of the mailstream.
The envelope stacker 230 is a general depiction of any device, be it a mail bag, sort bin, accumulation tray, etc. for placement of the mail pieces that comprise the mailstream to be presented to a postal authority or other distribution channel. Optionally, the envelope stacker 230 may employ an edge marking device 284 for placement of an ink based or felt-tip based mark upon the edge of a mail piece upon its entry to envelope stacker 230 to distinguish it from others. Alternately, there may be no envelope stacker 230, whereby the output position of the mailstream may be a conveyor system or other processing resource.

Additional processes for influencing the output mailstream such as address cleansing, move updating, determination of mail piece weight and presorting for rate-class discounts are completed by the data center processor 130 (e.g., operations upon the address list) or by processes that are executed before data is transferred to the data center processor. This is the typical approach to mail preparation, which includes sorting the documents according to postal authority rules before the print file 141 is created in accordance with sortation rules for enabling maximum workshare discounts. Alternately, the mail can be manufactured in any order and put into the correct groupings using a sorting machine. Typically, sorted mail 250 in correctly tagged trays is provided as a mailing to the postal authority 110. Numerous inserters or inserter environments 100 may have been used to create the mailing.

In the examples, the mail processing environment (e.g., inserter environment 100) includes one or more post inserter processing devices, which may operate upon a mail piece after it is transported or processed accordingly by the inserter device. As discussed more below, one or more device control options for processing of the hard copy mail piece by a post inserter processing device are selected based on address validity determinations by the validation system 220. This enables modifying post production processing of a hard copy mail piece, to implement a device control option selected upon a determination that the address information appearing on the particular hard copy mail piece does not correspond to a valid physical delivery location.

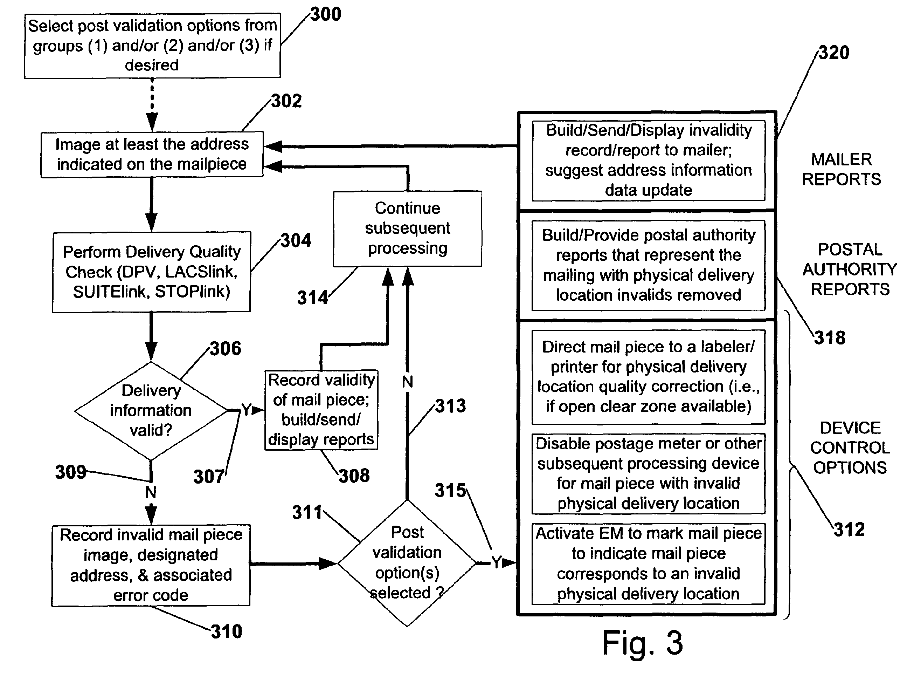

The post inserter processing device(s) may include, as dictated by one's processing requirements, components such as a printer and/or labeler 280 for placing specific markings upon the mail piece prior to entry into a designated mail tray as shown in Fig. 2. Whether presently configured or not, such components may be enabled or disabled according to device control options which are activated in response to whether the address information appearing on a mail piece corresponds to a valid physical delivery location. Hence, even when all possible post processing components are made available (e.g., a postage meter), the determination as to whether (and if so how) they are employed or activated depends on the configuration of the device control options, as described in further detail with reference to Fig. 3. It will be seen that where the printer and/or labeler 280 is desired as an element of the inserter environment 100, it may be used to print on a mail piece various error codes, labels or other markings for enhancing the deliverability of the mail piece or at least acknowledging its status relative to its physical delivery location quality. The printed data may be a corrected delivery point barcode that has been updated based on a check performed by the validation system 220, which determines that the address information on a mail piece fails to correspond to a valid physical delivery location. The check is performed at or near real-time during mail processing device operation. A label is only applied when there is no "clear zone" available to print the corrected barcode and/or other print data.

As mentioned, the validation system 220, which includes an imaging device, may be implemented for acquiring image data associated with each mail piece prior to it being passed on to a designated output tray. In the exemplary depiction, the designated output tray could be a reject bin 235 for accumulation of mail pieces not meeting physical delivery location quality expectations, or one or more output trays of the envelope stacker 230 for accumulation of mail pieces that meet physical delivery location quality expectations. For example, mail pieces with address information that does not correspond to a physical delivery location may be directed to the reject bin 235, whereas mail pieces with address information that do correspond to a physical delivery location may be directed to the appropriate tray(s) of the stacker 230. As such, one or more diverters for directing mail pieces to a particular tray may too be considered as downstream processing devices.

As outlined above, the validation system 220 comprises an imaging device and a validation processing module, to facilitate image capture and processing of address information to determine if address correspond to valid physical delivery locations and possibly to valid addressing with regard to other quality factors. The address information acquired, as representative image data, may include but is not limited to: recipient name or designation, street name, suite designation, apartment number, room number, P.O. Box designation, building name, city, state and ZIP information. In addition, the address information could include keyline data associated with the above for enhanced mail processing. Alternately, the full data associated with a printed address may be contained in a barcode or other non-alphanumeric representation.

Regardless of form, once acquired, the image data may be interpreted and/or deciphered via corresponding OCR, BCR and other image processing techniques. Once interpreted, a physical delivery location quality analysis may be further performed on the interpreted image data; the analysis being performed based at least in part on: the delivery information physically printed upon the mail piece as acquired and postal authority approved physical delivery location quality data as (e.g., STOPLink, SUITELink, NCOA database entries), as well as whether the address information appearing on a mail piece corresponds to a valid physical delivery location.

The validation system 220 may be implemented to receive data from the inserter control computer 120 and to capture an image of the address information that appears on each mail piece. The validation system 220 communicates information based on its address checking to a validation computer 240. The validation system 220 has an interface with the data center processor 130. Also, the validation system includes a processing module to process image data from an imaging device included in the validation system 220, e.g., a camera, multi-line scanner, optical character reader, or other device (shown generally in Fig. 1), and to process data from the inserter control computer 120 which is routed through the inserter environment 100. Depending on available space and configuration of the inserter environment 100, the validation computer 240 can be physically located in the inserter environment 100, kept as a separate unit, or even communicated with via a network connection.

The validation system computer 240 may also be coupled to or include an operator work station 270 for allowing a user to access the various functions and control mechanisms of the validation system 220, such as the device control options (which the user may set). The operator work station 270 can be integrated into the inserter environment 100 or act as a stand alone unit. For the sake of clarity, it is assumed that the validation components include the validation system 220, the validation computer 240 and an operator work station 270. Similarly, the validation system 220 is assumed to include an imaging device that may or may not be located within the validation system 220 itself. The individual validation components will not always be individually identified when referring to the validation system.

In the example, the validation computer generates the hard copies reports 290 and/or the electronic audit file 291 for the postal authority 110. Those reports reflect the address information validations performed by the validation system 220. The data center processor 130 may generate an electronic data file 261 and supply that file to the validation computer 240 for its use in generating the outputs for the postal authority 110. The format of the data file 261 is similar to that of the electronic audit file 291, except that the file 261 is generated from the data used by the processor 130. The validation computer 240 may utilize some of the data from the file 261, although the final outputs of the reports 290 and/or the electronic audit file 291 will reflect the analysis of the hard copy mail pieces by the validation system 220 and thus the actual mailstream 250 that is delivered to the postal authority 110.

The process flow for utilization of the validation system 220 during mail piece processing that enables physical delivery location quality to be assessed and addressed prior to mailstream entry and/or postage application, is presented in Fig. 3. Generally, prior to the production run and specifically before any mail pieces reach an output tray 230/235, the operator of the inserter environment 100 may set one or more device control options (event 300). The device control options are activated by the control module of the inserter control computer 120 or other like control module capable of controlling device behavior within the inserter environment 100. The device control options may be selected responsive to, but not limited to image data, data representative of the one or more addresses read by the reader and corrected address data for any address that failed the physical delivery location quality check, such as addresses that do not correspond to valid physical delivery locations. Hence, the device control options are activated (by the control module) responsive to whether the address appearing on a mail piece corresponds to a valid physical delivery location. The control device options may include, but are not limited to: rejecting the mail piece, marking the mail piece to indicate a need for correction, labeling the mail piece with the corrected address data, printing a corrected delivery point barcode upon the mail piece and disabling a postage metering system for the mail pieces that failed the physical delivery location quality check, such as mail pieces with addresses that do not correspond to valid physical delivery locations.

The operator may set for execution one or more of the device control options from one or more of the categories listed above. On the other hand, the operator may choose to set none of the device control options in keeping with specific application requirements. In general, the device control options can be set using a user interface included in the operator work station 270 of the validation system 220, which is available to an operator of the document processing device. The user interface may be designed as a graphical user interface (GUI) to enable ease of operation by the operator. Alternatively, the user interface may be rendered by the inserter control computer 120 for enabling device control option input. In addition to setting of the device control options, the operator may also be able to specify other processing conditions or actions, such as the type of physical delivery location analysis functions to be performed, be it DPV, LACSlink, etc.

Having specified the device control options in advance (event 300), each mail piece is imaged by the validation system 220 during processing, prior to the entry of the mail piece to a specific output tray 230/235 (event 302) or application of postage. In particular, the delivery information on the mail piece is captured as an image and used by the validation system 220 for physical delivery location quality analysis (event 304). Interpretation of image data for performing physical delivery location quality analysis may be enabled using optical character recognition technology (OCR) or other image data extraction and interpretation means. Typical OCR utilities include an optical scanner for reading numeric or alpha-numeric characters, and sophisticated software for analyzing images and graphic primitives. Alternatively, the OCR system may include a combination of hardware (e.g., specialized circuit boards) and software to recognize characters, or can be executed entirely through software operating within the validation system 220. As yet another alternative, the image processing functions may be performed externally to the inserter environment 100 (e.g., by an independent processor), and subsequently communicated to the validation system 220 over a network. Those skilled in the art will recognize that various OCR utilities and configurations may be employed by the validation system 220 for the purpose of recognizing the plurality of delivery information that may appear on a mail piece.

Alternatively, the delivery information (e.g., address, suite number, zip code, state, city, and other components generally associated with an address block) may be represented on the mail piece in the form of an encoded 2D glyph or code. Exemplary 2D code formats may include, but are not limited to DataMatrix, PDF-417 and DataGlyph. As recognized formats, the interpretation utility (e.g., OCR) could be configured in accord with the applied format to extract the designated delivery information. In some instances, the 2D code may be marked upon the mail piece along with the printed delivery information. Hence, the delivery information need not be limited to just human-readable print upon the mail piece.

Once the image data is deciphered into its representative address information, and the physical delivery location quality analysis is performed using this data, a deliverability (physical delivery location quality) result is returned (event 306). When the corresponding address information is determined to be deliverable (event 307)-meaning the mail is deliverable-as-addressed-the validity of the mail piece is recorded (event 308) and the piece is advanced downstream for the performance of any intended post inserter processing if applicable (event 314), i.e., as performed via printer and/or labeler 280 or other processing components 282 and stacker 230. The "other" processing components 282 in Fig. 2, are representative of any components that may comprise the post inserter processing device 412, and which may be intended to operate upon a mail piece prior to its entry into the mailstream, and after processing by the validation system 220. A practical example may include, but is not limited to a postage meter intended to apply postage markings onto the mail piece; the execution of a printer for spraying of additional markings onto the mail piece (e.g., sequence #, mail piece identification); or one or more diverters that affect which output tray within the envelope stacker 230 a valid mail piece is to be directed.

In the case of a postage meter, for instance, when the address information on a mail piece corresponds to a valid physical delivery location (event 307), the valid delivery information along with the status of the mail piece is recorded such as to a manifest or validity log (event 308). Data recorded may include, but is not limited to recordation of: the image data associated with the mail piece and the address information associated with the mail piece as interpreted from the image data. This information is compiled and stored by the validation computer 240, inserter control computer 120 or other data management medium for retrieval and later interpretation on demand. Also, the various information or data elements stored may be optionally presented to the user on the workstation 270 via a graphical user interface (GUI) in real-time as each mail piece is processed.
Correspondingly, the postage meter may apply postage accordingly and the piece may be further advanced to the envelope stacker 230 for accumulation of the mailstream (e.g., event 314).

When the delivery information is determined to be undeliverable as addressed (event 309), e.g., if the address on a mail piece does not correspond to a valid physical delivery location, the invalid delivery information along with the status of the mail piece is recorded (event 310) such as to an error log. Data recorded may include, but is not limited to recordation of: the image data associated with the mail piece, the delivery information associated with the mail piece as interpreted from the image data, and a corresponding error code associated with the mail piece. This information is compiled and stored by the validation computer 240, inserter control computer 120 or other data management medium for retrieval and later interpretation on demand. Also, the various information or data elements stored may be optionally presented to the user on the workstation 270 via a graphical user interface (GUI) in real-time as each mail piece is processed. Those skilled in the art will recognize that various other data pertaining to each imaged mail piece may be compiled, and that the above described stored data is exemplary in nature. Indeed, other combinations of or types of data pertaining to the mail piece may also be compiled without limiting the scope of the present teachings.

In the scenario wherein the delivery information is determined invalid (event 309) but no particular device control option(s) were selected (events 311 and 313), the mail piece simply advances downstream for any applicable subsequent processing (event 314) by post processing components, and eventually to the mailstream accumulated to the envelope stacker 230. For the most part, this corresponds to the general behavior of prior art document processing devices. However, when the delivery information is determined invalid (event 309) and one or more of the device control options was set in advance (events 300 and 315), the control module of the inserter control computer 120 activates the appropriate device control options for controlling the behavior or function of any subsequent post processing components 282 of the post inserter processing device that are intended for operating upon the mail piece having the invalid address information.

For example, a particular device control option may be to disable the execution of a postage meter intended for operation upon the mail piece. By disabling the postage meter, postage need not be affixed to a mail piece that ultimately cannot be delivered to a physical location. Like with all other device control options to be presented, the control option may result in a change of state of the particular device-i.e., the postage meter-for the particular instance of a mail piece. Thereafter, once the device control options are performed, the control module may activate the original settings of the device control options so that the post inserter processing device may return to its original state for processing of subsequent mail pieces.

Another exemplary device control option may be to direct the mail piece to a labeler for application of a label to create a clear zone for printing purposes. In particular, the clear zone may provide an opportunity for corrective address information representative of a valid physical delivery location to be printed onto the mail piece. Alternatively, the labeler may be disabled to prevent the application of a label onto a mail piece determined to have an invalid address. Another exemplary device control option may be the enabling of a printer adapted to print corrective address information representative of a valid physical delivery location onto a hard copy mail piece. Alternatively, the printer may be disabled to prevent the application of ink onto a mail piece determined to have an invalid address. The device control options corresponding to the above described configurations are shown in Fig. 2, with respect to the downstream printer and/or labeler processor 280. In this example, corrective address information for use on the mail piece could be accessed such as by the validation system 220. This updated information is commercially available via the usage of various physical delivery location quality software products and the like that take advantage of postal authority approved delivery information databases (e.g., address correction service (ASC), NCOAlink).

Still yet, another exemplary device control option may be to enable an edge marker 284 to place a mark on the mail piece upon determination that an invalid address appears on a mail piece, and prior to entry of the mail piece into the mailstream. By marking the mail piece this way, it may be pulled out of the envelope stacker manually as the mail is swept to enhance the overall composition quality of the mailstream Marking the mail piece makes it readily identifiable for extraction from the final mailstream.

An alternative exemplary device control option further includes the usage of the printer and/or labeler to mark the mail piece as invalid (e.g., print an error code onto an open area of the mail piece), and then direct this mail piece to a reject bin 235. Directing of the mail piece to a rejection bin 235 maintained by the envelope stacker 230 upon determination of invalidity may involve the modification of one or more diverters and other devices operable along the transport path of the document processing system by the control module through appropriate selection of the device control options. In this way, the operator may set the device control options to separate mail pieces with invalid addresses from those with valid addresses which are to be advanced to the mailstream.

The device control options include instructions and commands for the modification of post processing components of the post inserter processing device intended for subsequent processing upon a mail piece. Hence the exemplary device control operations of the labeler, printer, diverters, edge marker, postage meter, etc. described above, which relate to the modified behavior of the post processing components of the post inserter processing device (after a determination that the address on a mail piece does not correspond to a valid physical delivery location), are distinct from their original or normal operations (which assumes that the address on a mail piece does corresponds to a valid physical delivery location). Again, modification of machine level events or behavior, as prescribed in event 312, will only commence when applicable.

Ultimately, control module of the inserter control computer 120, selects (based on whether the address on a mail piece corresponds to a valid physical delivery location) the appropriate device control options to modify the post processing components 282 of the post inserter processing device (event 312), and particularly those that may impact cost efficiency or influence the physical delivery location quality and composition of the mailstream. Skilled practitioners will recognize that the type of applicable post processing components 282 of the post inserter processing device chosen for modification (e.g., disablement, functional modification, reconfiguration) may vary from one application to the next.

Corresponding to the modification of one or more device control operations of the applicable post processing components of the post inserter environment (event 312), one or more report options may be performed. For example, the mailer report category 320 may include the step of building a report for the mailer or agent thereof (i.e., a mail service provider, letter shop) indicative of at least the mail pieces determined as invalid for delivery. This report may be generated using recorded data pertaining to the mail pieces processed, and presented to the mailer in hardcopy form as a printed report or electronically via a network connection. Alternatively, the data may be presented on the workstation 270 via a graphical user interface (GUI). Feedback of this nature may be presented in real-time as each mail piece is processed. Optionally, the report may include the data compiled in association with the invalid mail piece such as the image data associated with the mail piece, the associated delivery information and corresponding error code. As a further option, updated (corrected) delivery information may be recommended or provided to the mailer or included with the report. By providing such feedback, the mailer may more readily update or reconcile their mailing list, as maintained by the data center processor 130, to prevent the same delivery issues from occurring in the future and acquire useful knowledge regarding the intended recipient (e.g., cardholder's apartment number no longer exists).

For the postal authority report category 318, an exemplary device control option may be to generate a report 290 (e.g., a mail qualification report) similar to that described above that is specific to the data and format requirements of the postal authority. Hence, the report 290 may indicate information pertaining to only those mail pieces determined as deliverable and therefore as being presented to the postal authority for distribution. The mail pieces not actually placed into the mailstream may or may not be indicated, thus providing the postal authority with mail piece data representative of that to be deliverable-as-addressed. Optionally, the report 290 may be presented to the postal authority along with other more traditional mail qualification reports or documentation, such as a postage summary report or mail manifest report. These differing reports may provide additional data related to each mail piece, including but not limited to POSTNET, 4-state barcode or PLANET barcode, mail piece weight, postage claimed and 11-digit ZIP code. Alternatively, the post inserter processing device may list the above mentioned parameters in association with a sequence number assigned to each respective mail piece. These reports may be delivered in hardcopy form to the postal authority in accompaniment with standard documentation, or electronically as feasible. As the report generation process varies from one postal jurisdiction to another, significant detail regarding reports generation and formatting is beyond the scope of the present teachings and not discussed further herein.

Indeed, those skilled in the art will recognize that various other scenarios for detecting and/or handling physical delivery location quality problems inherent in a mailing may be applied. Furthermore, it will be obvious to practitioners of the art that many of the exemplary options described herein may be applied independently or in combination to account for various mail processing needs. So, for example, an mail piece with an address that does not correspond to a valid physical delivery location may require a reconciliation to a postal authority report 318, and the advancement of the mail piece to a reject bin as opposed to a qualifying bin. Ultimately, the exemplary teachings herein enable the mailer to readily handle deliverability problems based on physically fabricated mail pieces and corresponding delivery information as opposed to electronic representations thereof.

As mentioned, the exemplary teachings provide a convenient framework for enabling the mailer to reconcile their electronic delivery information associated with a given recipient based on actually printed delivery information-thus improving the quality and integrity of their mailing lists. Moreover, the exemplary teachings provide a convenient framework and methodology by which to further the physical delivery location quality initiatives required by the postal authority, while preventing mailer waste and misuse. Ensuring correct delivery information (e.g., delivery point data) on the mail piece is a quality priority for mailers. Every mail piece with physical delivery location quality deficiencies may cost more to mail, be delayed in delivery, not delivered and wasted resources to prepare the mail piece.

Skilled artisans will recognize that some if not all of the pre and post mail processing steps presented in the examples, while illustrated as occurring in a sequential nature, may be performed concurrently when feasible. Furthermore, it is quite possible that the order in which certain processing events occur may be interchanged at times, or optionally opted-out for completion by the operator. For example, the validation system 220, while depicted as coupled near the backend of the inserter device within inserter environment 100, may physically reside elsewhere in the document processing path whereby the physical markings applied to the mail piece may be observed. For instance, the validation system 220 could be placed in proximity to the document input section 160 for performance of a delivery analysis even prior to placement onto the inserter transport 200. Indeed, the order, mode and nature of the processing events as illustrated in the figures may be adapted as required to meet varying mailer needs, postal regulations and mail processing standards.

As shown by the above discussion, many of the functions relating to the validation system 220 and associated processing of electronic data or files are implemented by one or more computers, which of course may be connected for data communication via the components of a network. The hardware of such computer platforms typically is general purpose in nature, albeit with an appropriate network connection for communication with other system elements or equipment and/or for communication via the intranet, the Internet and/or other data networks.

As known in the data processing and communications arts, each such general-purpose computer typically comprises a central processor, an internal communication bus, various types of memory (RAM, ROM, EEPROM, cache memory, etc.), disk drives or other code and data storage systems, and one or more network interface cards or ports for communication purposes. The computer system also may be coupled to a display and one or more user input devices (not shown) such as alphanumeric and other keys of a keyboard, a mouse a trackball, etc., as represented generally by the operator work station 270 in the example of Fig. 2. The display and user input element(s) together form a service-related user interface, for interactive control of the operation of the computer system. These user interface elements may be locally coupled to the computer system, for example in a workstation configuration, or the user interface elements may be remote from the computer and communicate therewith via a network. The elements of such a general-purpose computer system also may be combined with or integrated into a validation system 220 and/or associated validation computer 240 as in Fig. 2 or even into sorting and/or inserting equipment.

The software functionalities involve programming, including executable code as well as associated stored data. The software code is executable by the general-purpose computer that functions as a data processor, e.g. modules 408 or 410 (Fig. 1). In operation, the executable program code and the associated verification data are stored within the general-purpose computer platform. At other times, however the software may be stored at other locations and/or transported for loading into the appropriate general-purpose computer system. Hence, the embodiments involve one or more software products in the form of one or more modules of code. Execution of such code by an internal processor of the computer platform enables the platform to implement the verification system functions, in essentially the manner performed in the embodiments discussed and illustrated herein. With this in mind, the physical delivery location quality analysis need not be restricted to being performed by a centralized processing device, such as the validation system 220 or computer 240, but may rather be performed as a distributed or shared processing task across a network of processing devices, which together may be included in the validation system 220.

As used herein, terms such as computer or machine "readable medium" refer to any medium that participates in providing instructions to a processor for execution. Such a medium may take many forms, including but not limited to, non-volatile media and volatile storage media. Non-volatile storage media include, for example, optical or magnetic disks, such as any of the storage devices in any computer(s) operating as one of the computer 240 of the validation system 220 as shown for example in Fig. 2. Volatile storage media include dynamic memory, such as main memory of such a computer platform. Common forms of computer-readable media therefore include for example: a floppy disk, a flexible disk, hard disk, magnetic tape, any other magnetic medium, a CD-ROM, DVD, any other optical medium, punch cards paper tape, any other physical medium with patterns of holes, a RAM, a PROM and EPROM, a FLASH-EPROM, any other memory chip or cartridge. Many of these forms of computer readable media may be involved in carrying one or more sequences of one or more instructions to a processor for execution.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. For instance, while the discussion above has been from the perspective of mail processing for the enhancement of workshare discounts, the exemplary teachings may also apply to other forms of mail processing such as full-rate mailing, mail not printed with POSTNET barcodes, or other generally non-machineable mail. In another instance, while the inserter environment 100 has been presented in the exemplary illustrations with respect to an inserter, the disclosed teachings may be readily applied to sorting devices and other document processing means. Indeed, any device capable of fabricating a mail piece and requiring a physical delivery location quality validation prior to postage application or presentation for delivery to the postal authority may apply the teachings. An example of this would be the enablement of a printer with a physical delivery location quality check module for validating the delivery information placed on a postcard. Generally, postcards are not processed by means of an inserter or the like, but may still require and benefit from a physical delivery location quality analysis prior to mailstream entry or postage affixation.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A system for processing mail to generate a mailstream of hard copy mail pieces for mailing, the system comprising:
an inserter device adapted to compile hard copy mail pieces to form the mailstream;
a post inserter processing device for operating on one or more of the hard copy mail pieces of the mailstream from the inserter device in accordance with device control options;
a validation system coupled to the inserter device, the validation system being adapted to:
(a) capture images of address information from a plurality of the hard copy mail pieces as processed by the inserter device; and
(b) check whether the address information appearing in the images of each of the plurality of the hard copy mail pieces corresponds to a valid physical delivery location; and
a control module adapted to activate device control options of the post inserter processing device for processing of the plurality of the hard copy mail pieces based on whether the address information appearing in the images of each of the plurality of the hard copy mail pieces corresponds to a valid physical delivery location.

2. The system of claim 1, further comprising an interface adapted to enable a user to set, prior to the processing of the hard copy mail pieces, one or more of the device control options to be activated when the address information on a hard copy mail piece does not correspond to a valid physical delivery location.

3. The system of claim 1, wherein the device control options comprise at least one of: enabling and disabling a postage meter, disabling and enabling a labeler adapted to create a clear zone for the printing of corrective address information representative of a valid physical delivery location onto a hard copy mail piece, disabling and enabling a printer adapted to print corrective address information representative of a valid physical delivery location onto a hard copy mail piece, and disabling and enabling an edge marker adapted to place a mark on a hard copy mail piece.

4. The system of claim 1, wherein the post inserter processing device comprises at least one of: a postage meter, a labeler, a printer and an edge marker.

5. The system of claim 1, wherein the check involves comparing the address information appearing in the images of each of the plurality of the hard copy mail pieces against a database of valid physical delivery locations.

6. A method for processing mail to generate a mailstream of hard copy mail pieces for mailing, the method comprising:
compiling hard copy mail pieces in a mail production device, to form the mailstream;
capturing images of address information from a plurality of the hard copy mail pieces as the plurality of the hard copy mail pieces are being processed by the mail production device;
checking whether the address information appearing in the images of each of the plurality of the hard copy mail pieces corresponds to a valid physical delivery location;
activating device control options for post production processing of the plurality of the hard copy mail pieces based on outcomes of the step of checking; and
operating a post production processing device on the plurality of the hard copy mail pieces of the mailstream in accordance with the device control options selected in the step of selecting.

7. The method of claim 6 further comprising the step of enabling a user to set, prior to the processing of the hard copy mail pieces, one or more of the device control options to be activated when the address information on a hard copy mail piece does not correspond to a valid physical delivery location.

8. The method of claim 6 wherein the device control options comprise at least one of: enabling and disabling a postage meter, disabling and enabling a labeler adapted to create a clear zone for the printing of corrective address information representative of a valid physical delivery location onto a hard copy mail piece, disabling and enabling a printer adapted to print corrective address information representative of a valid physical delivery location onto a hard copy mail piece, and disabling and enabling an edge marker adapted to place a mark on a hard copy mail piece.

9. The method of claim 6, wherein the step of checking involves comparing the address information appearing in the images of each of the plurality of the hard copy mail pieces against a database of valid physical delivery locations.

10. The method of claim 9, wherein the database is a postal authority approved database of valid physical delivery locations.

11. A method for modifying the processing of hard copy mail pieces to form a mailstream, the method comprising:
obtaining address information appearing on a hard copy mail piece generated in a mail production device;
determining that the address information appearing on the hard copy mail piece does not correspond to a valid physical delivery location;
activating one or more device control options for processing of the hard copy mail piece responsive to determining that the address information appearing on the hard copy mail piece does not correspond to a valid physical delivery location; and
modifying post production processing of the hard copy mail piece to implement the device control option selected in the step of selecting.

12. The method of claim 11, further comprising the step of setting prior to the processing of the hard copy mail pieces, one or more of the device control options to be activated when the address information on a hard copy mail piece does not correspond to a valid physical delivery location.

13. The method of claim 12, wherein the setting step is responsive to a user input of a selection from among a plurality of available device control options for post production processing.

14. The method of claim 11, wherein the device control options include enabling and disabling at least one of: a printer, a labeler, and a postage meter.

15. The method of claim 11, further comprising the step of resetting at least one of the device control options so that the at least one of the device control options is set to its original state upon completion of processing of the hard copy mail piece having the address information that does not correspond to a valid physical delivery location.

16. The method of claim 11, wherein the step of checking comprises comparing the address information appearing on the hard copy mail piece against a database of valid physical delivery locations.
